# EUROPÄISCHE PATENTSCHRIFT

(11) **EP 1 030 540 B1**
(45) Veröffentlichungstag und Bekanntmachung des Hinweises auf die Patenterteilung: **10.12.2003**
(21) Anmeldenummer: 00101908.2
(22) Anmeldetag: 01.02.2000
(51) Int. Cl.: H05B 37/02

(54) **Bewegungsmelder**
Motion detector
Détecteur de présence

(30) Priorität: 19.02.1999 DE 19906930
(43) Veröffentlichungstag der Anmeldung: 23.08.2000
(73) Patentinhaber: ABB PATENT GmbH, 68526 Ladenburg (DE)
(72) Erfinder: Rosch, Rainer, Dr.-Ing., 58513 Lüdenscheid (DE); Zapp, Robert, Dipl.-Ing., 58579 Schalksmühle (DE)
(74) Vertreter: Miller, Toivo

(56) Entgegenhaltungen:
- EP-A- 0 871 103
- WO-A-97/06542
- DE-A- 19 623 481
- DE-A- 19 625 719
- US-A- 5 442 177
- US-A- 5 699 243

## Beschreibung

Die Erfindung bezieht sich auf einen Bewegungsmelder, insbesondere für Unterputzmontage. Der Bewegungsmelder ist besonders zur Steuerung eines Leuchtmittels geeignet und weist ein Betätigungsmittel zur manuellen Auswahl von Betriebszuständen auf.

Ein solcher Bewegungsmelder ist aus "Passiv-Infrarot-Bewegungsmelder", Verlag Moderne Industrie, Landsberg/Lech, 1996 (Die Bibliothek der Technik, Band 31) bekannt, wobei insbesondere auf den Seiten 49 und 50 ein üblicherweise als Schiebeschalter ausgeführter Umschalter beschrieben ist. Der Umschalter ermöglicht eine manuelle Umschaltung zwischen Betriebsarten "Ein", "Aus" und "Automatik". Dabei bedeutet "Ein" ein dauerhaftes Einschalten einer an den Bewegungsmelder angeschlossenen Leuchte, "Aus" einen dauerhaften Ausschaltzustand, und "Automatik" den eigentlichen Bewegungsmelderbetrieb, bei dem nach Detektion eines bewegten wärmestrahlenden Objektes der Bewegungsmelder die Leuchte für eine bestimmte Zeit einschaltet. Die Funktionen oder Betriebszustände "Ein" und "Aus" haben in der Praxis durchaus Bedeutung, weil oftmals ein von einer Bewegungsdetektion unabhängiger Ein- oder Ausbetrieb für eine bestimmte Dauer zweckmäßig ist. Allerdings besteht das Problem, daß häufig eine manuelle Rückstellung in den Automatikbetrieb vergessen wird, so daß die Bewegungsmelderfunktion fehlt, bis die fehlerhafte Einstellung bemerkt und korrigiert wird. Dieses Problem ist in der vorgenannten Literaturstelle bereits angesprochen, als Lösung wird allerdings lediglich die Möglichkeit angegeben, im Bedarfsfall den Umschalter in der Stellung "Automatik" zu fixieren, so daß keine Abweichung vom Automatikbetrieb möglich ist.

Aus der DE 196 25 719 A1 ist ein Bewegungsmelder bekannt, der mit Hilfe eines Tasters, der elektrisch im Pfad der Versorgungsspannung angeordnet ist, programmierbar ist. Die Programmiermöglichkeiten dieses Bewegungsmelders sind jedoch sehr eingeschränkt und das Problem, dass eine manuelle Rückstellung in den Automatikbetrieb vergessen werden kann, besteht auch hier.

Die EP 0 871 103 A1 beschreibt eine Beleuchtungs-Steuereinrichtung, die mit Hilfe eines Tasters programmierbar ist, der ebenfalls elektrisch im Pfad der Versorgungsspannung angeordnet ist. Bei dieser Steuereinrichtung ist unter anderem eine selbständige Rückstellung in den Automatikbetrieb nach einer festgelegten Zeitspanne vorgesehen.

Der Erfindung liegt daher die Aufgabe zugrunde, eine Möglichkeit zur manuellen Betriebsartenwahl zu schaffen, bei der die Dauer des Ein- oder Ausbetriebs bis zur selbständigen Rückstellung in den Automatikbetrieb bei der Programmierung wählbar ist.

Diese Aufgabe wird bei einem Bewegungsmelder nach dem Oberbegriff des Anspruchs 1 durch dessen kennzeichnende Merkmale gelöst.

Es wird gemäß Anspruch 1 vorgeschlagen, den üblichen Umschalter oder Schiebeschalter durch die Kombination eines Tasters und einer Auswerte- und Steuerelektronik zu ersetzen. Mit diesen Mitteln ist der Ein-Zustand und/oder der AusZustand für eine bzw. mehrere unterschiedliche Dauern herstellbar, wobei nach Ablauf der Dauer eine selbsttätige Umschaltung in den Automatikbetrieb erfolgt.

Eine weitere Beschreibung der Erfindung und deren Ausgestaltungsmöglichkeiten erfolgt nachstehend anhand der Zeichnung.

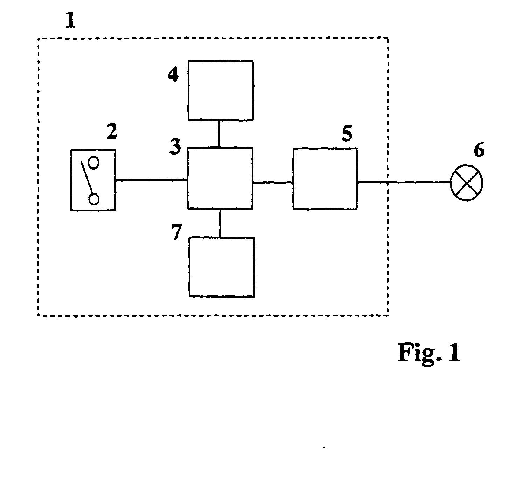

Fig. 1 zeigt in schematisierter Darstellung einen Bewegungsmelder 1, der einen Tastschalter 2 und eine nachgeschaltete Auswerte- und Steuerelektronik 3 aufweist.

Die Elektronik 3 kann beispielsweise ein für sonstige Funktionen im Bewegungsmelder 1 enthaltener Mikrocontroller sein. Ein Infrarot-Sensor 4 einschließlich Verstärker und Filter ist an die Elektronik 3 angeschlossen. Außerdem ist der Tastschalter 2 zur Signaleingabe mit der Auswerteelektronik 3 verbunden. Die Auswerte- und Steuerelektronik 3 steuert über ein Schaltglied 5 eine angeschlossene Leuchte 6. Der jeweilige Betriebszustand ist mittels einer Anzeige 7 anzeigbar.

Nachstehend ist beispielhaft eine mögliche Kombination von Funktionen angegeben, die durch ein oder mehrmaliges kurzzeitiges oder langes Betätigen des Tastschalters einstellbar sind:

| | |
|---|---|
| Bewegungsdetektion | Licht einschalten |
| | |
| Taste kurz drücken | Licht für 10 Minuten einschalten |
| Taste 2x kurz drücken | Licht für 2x10 Minuten einschalten |
| Taste 3x kurz drücken | Licht für 3x10 Minuten einschalten |
| Taste nx kurz drücken | Licht für nx10 Minuten einschalten Nach Ablauf der Zeiten wird die Bewegungsmelderfunktion wieder aktiviert. |
| Taste lang drücken | Rücksetzen der gespeicherten Werte und Aktivierung Bewegungsmelderfunktion |
| Taste 2x lang drücken | Licht ausschalten, die Bewegungsmelderfunktion wird erst am nächsten Tag, z.B. beim Hell/Dunkel-Wechsel des Tageslichts wieder freigegeben. |

Mittels einer Zweifarb-LED als Anzeige 7 lassen sich z.B. folgende Zustände anzeigen:

| | |
|---|---|
| LED grün | Bewegungsmelderfunktion, |
| LED rot | Über Taster vorgegebene Zeit ist aktiv, |
| LED aus | Gerät ist ausgeschaltet. |

Es versteht sich, daß anstelle einer Mehrfarb-LED auch einfarbige LEDs oder andere Anzeigemittel eingesetzt werden können.

## Patentansprüche

1. Bewegungsmelder (1), zur Steuerung eines Leuchtmittels (6), der ein Betätigungsmittel (2) zur manuellen Auswahl von folgenden Betriebszuständen
- Automatikbetrieb = üblicher Bewegungsmelderbetrieb mit Einschaltung des Leuchtmittels nach der Detektion einer Objektbewegung,
- Licht-Einschaltung,
- Licht-Ausschaltung und
- Rückkehr zum Automatikbetrieb,
eine Auswerte- und Steuerelektronik (3)
und eine Anzeige (7) zur Anzeige der Betriebszustände aufweist,
wobei als Betätigungsmittel ein Tastschalter (2) vorhanden ist, der mit der Auswerteund Steuerelektronik (3) in elektrischer Verbindung steht,
**dadurch gekennzeichnet, dass**
die Auswerte- und Steuerelektronik (3) über folgende Betätigungsarten des Tastschalters (2):
- einmaliges kurzzeitiges Betätigen,
- mehrmaliges kurzzeitiges Betätigen,
- einmaliges länger anhaltendes Betätigen,
- mehrmaliges länger anhaltendes Betätigen,
je nach Festlegung, eine Umschaltung zwischen den Betriebszuständen vornimmt, und dass
- die Licht-Einschaltung für mindestens eine durch die Betätigungshäufigkeit des Tastschalters (2) festlegbare Dauer aktiv ist und anschließend ein selbsttätiges Rückkehren in den Automatikbetrieb stattfindet,
- die Licht-Ausschaltung für eine durch die Betätigungshäufigkeit des Tastschalters (2) festlegbare Dauer oder bis zum Eintreffen eines vorgegebenen Ereignisses aktiv ist und anschließend ein selbsttätiges Rückkehren in den Automatikbetrieb stattfindet,
- bei der Rückkehr zum Automatikbetrieb die gespeicherten Ein- oder Ausschaltverzögerungen zurückgesetzt werden.

2. Bewegungsmelder nach Anspruch 1, **dadurch gekennzeichnet, dass** die Anzeige (7) eine oder mehrere ein- oder mehrfarbige lichtemittierenden Dioden (LED) aufweist.

3. Bewegungsmelder nach einem der vorgenannten Ansprüche, **dadurch gekennzeichnet, dass** der Bewegungsmelder zur Unterputzmontage geeignet ist.

## Claims

1. A motion detector (1) for controlling a lighting means (6) which comprises an actuating means (2) for the manual selection of the following operating modes:
- automatic operation = usual motion detector operation with activation of the lighting means after the detection of a motion of the object:
- activation of light,
- deactivation of light, and
- a return to automatic operation,
as well as an electronic evaluation and control stage (3) and a display (7) for indicating the operating states, with a push-button operating switch (2) being present which is coupled to the electronic evaluation and control stage (3), **characterized in that**
the electronic evaluation and control stage (3) carries out a changeover between the operating states via the following types of actuation of the push-button operating switch (2):
- one-off short-time actuation;
- multiple short-time actuation;
- one-off actuation of longer duration;
- multiple actuation of longer duration,
depending on the determination, and that
- the light activation is active for at least one duration which can be determined by the actuation frequency of the push-button operating switch (2) and thereafter an automatic return to automatic operation occurs;
- the light deactivation is active for a duration which can be determined by the actuation frequency of the push-button operating switch (2) or until the occurrence of a predetermined event and thereafter an automatic return to automatic operation occurs;
- the stored activation or deactivation delays are reset on returning to automatic operation.

2. A motion detector as claimed in claim 1, **characterized in that** the display (7) comprises one or several single- or multi-color light emitting diodes (LEDs).

3. A motion detector as claimed in one of the preceding claims, **characterized in that** the motion detector is suitable for flush-mounting.

## Revendications

1. Détecteur de mouvement (1) pour la commande d'un luminaire (6), comprenant un moyen d'actionnement (2) pour la sélection manuelle des états de fonctionnement suivants :
- fonctionnement automatique = fonctionnement normal du détecteur de mouvement avec activation du luminaire après détection d'un mouvement d'un objet,
- allumage de la lumière,
- extinction de la lumière et
- retour au fonctionnement automatique,
une électronique d'interprétation et de commande (3)
et un afficheur (7) pour l'affichage des états de fonctionnement,
dans lequel le moyen d'actionnement est un interrupteur à touche (2) qui est connecté électriquement à l'électronique d'interprétation et de commande (3),
**caractérisé en ce que** l'électronique d'interprétation et de commande (3) réalise, par les modes d'actionnement suivants de l'interrupteur à touche (2) :
- un actionnement court,
- plusieurs actionnements courts,
- un actionnement prolongé,
- plusieurs actionnements prolongés,
selon de la détermination, une commutation entre les états de fonctionnement, et **en ce que** :
- l'allumage de la lumière est actif pendant au moins une durée pouvant être déterminée par la fréquence d'actionnement de l'interrupteur à touche (2) avant le retour automatique au fonctionnement automatique,
- l'extinction de la lumière est active pendant une durée pouvant être déterminée par la fréquence d'actionnement de l'interrupteur à touche (2) ou jusqu'à ce qu'un événement prédéterminé se produise avant le retour automatique au fonctionnement automatique,
- lors de retour en fonctionnement automatique, les temporisations d'allumage et d'extinction mémorisées sont automatiquement remises à zéro.

2. Détecteur de mouvement selon la revendication 1, **caractérisé en ce que** l'afficheur (7) présente une ou plusieurs diodes électroluminescentes (DEL) d'une ou plusieurs couleurs.

3. Détecteur de mouvement selon l'une quelconque des revendications précédentes, **caractérisé en ce que** le détecteur de mouvement peut être installé sous enduit.
